# EUROPÄISCHE PATENTANMELDUNG

(11) **EP 1 087 483 A1**
(43) Veröffentlichungstag der Anmeldung: **28.03.2001**
(21) Anmeldenummer: 00110710.1
(22) Anmeldetag: 19.05.2000
(51) Int. Cl.: H02B 11/167

(54) **Elektrische Schaltanlage**

(30) Priorität: 23.09.1999 DE 19945671
(71) Anmelder: Natus GmbH & Co.KG, 54292 Trier (DE)
(72) Erfinder: Perle, Josef, 72622 Nürtingen (DE); Späder, Herbert, 54344 Kenn (DE); Hermes, Ottmar, 54516 Wittlich (DE)
(74) Vertreter: Manitz, Finsterwald & Partner

(57) **Zusammenfassung**

Elektrische Schaltanlage, insbesondere für Mittelspannungen, also Nennspannungen im Bereich größer 1 KV bis kleiner 52 KV, mit wenigstens einem in ein Einschubfach (2) eines Rahmens (1) einsetzbaren, insbesondere Schaltgeräte tragenden Geräteeinschub (3), der mit elektrischen Kontakten (5) versehen ist, die mit im Rahmen (1) gehalterten elektrischen Gegenkontakten (6) in Eingriff bringbar sind, wobei zur Vereinfachung des Anschließens des Geräteeinschubs (3) an den Rahmen (1) die Kontakte (5) zur Eingriffnahme mit den Gegenkontakten (6) bei in das Einschubfach (2) des Rahmens (1) eingeschobenem Geräteeinschub (3) relativ zum Geräteeinschub (3) in Richtung auf die Gegenkontakte (6) verschiebbar sind.

## Beschreibung

Die vorliegende Erfindung betrifft eine elektrische Schaltanlage insbesondere für Mittelspannungen, also Nennspannungen im Bereich größer 1 KV bis kleiner 52 KV, mit wenigstens einem in ein Einschubfach eines Rahmens einsetzbaren, insbesondere Schaltgeräte tragenden Geräteeinschub, der mit elektrischen Kontakten versehen ist, die mit im Rahmen gehalterten elektrischen Gegenkontakten in Eingriff bringbar sind.

Derartige Schaltanlagen finden insbesondere dort Verwendung, wo Schalt-, Schutz-, Trenn-, Verteil- und/oder Steuerfunktionen zu erfüllen sind. Zur Herstellung des Kontaktes zwischen den Geräten eines Einschubs und im Rahmen gehalterten Sammelschienen, Anschlußkontakten oder dergleichen wird der gesamte Einschub in Richtung der Sammelschienen bzw. Anschlußkontakte verschoben, um dadurch die erforderlichen elektrischen Verbindungen herzustellen. Eine solche Schaltanlage ist aus der DE 296 01 101.0 bekannt, bei der eine am Geräteeinschub angebrachte und am Rahmen abstützbare Einschubhilfe vorgesehen ist, um den Geräteeinschub einzuschieben und in der Kontaktierungsstellung zu fixieren. Durch die Einschubhilfe ist dies verhältnismäßig einfach möglich.

Ein Problem tritt jedoch bei solchen Schaltanlagen auf, bei denen vor der Kontaktierung der elektrischen Kontakte mit den Gegenkontakten im Rahmen, also vor dem Einschieben des Geräteeinschubs, eine Steuerleitung zwischen Geräteeinschub und Einschubfach angeschlossen werden muß. Da der Geräteeinschub noch nicht eingeschoben ist, muß hierfür ein vieladriges Kabel verwendet werden, welches von Hand in den Geräteeinschub und in das Einschubfach eingesteckt werden muß. Dies ist umständlich und hat einen entsprechenden Platzbedarf zur Folge.

Der Erfindung liegt die Aufgabe zugrunde, eine elektrische Schaltanlage der eingangs genannten Art so weiterzubilden, daß das Einschieben und Kontaktieren des Geräteeinschubs, insbesondere auch seiner Steuerkontakte, vereinfacht ist.

Diese Aufgabe wird dadurch gelöst, daß die Kontakte zur Eingriffnahme mit den Gegenkontakten bei in das Einschubfach des Rahmens eingeschobenem Geräteeinschub relativ zum Geräteeinschub in Richtung auf die Gegenkontakte verschiebbar sind.

Durch die verschiebbare Ausgestaltung der Kontakte relativ zum Geräteeinschub ist es möglich, den Geräteeinschub zunächst ohne Kontaktierung mit den Gegenkontakten in das Einschubfach vollständig einzusetzen. Zur Kontaktierung werden dann nur noch die Kontakte und nicht mehr der gesamte Geräteeinschub in Richtung auf die Gegenkontakte verschoben. Vorteilhafterweise muß daher zur Kontaktierung nur noch eine geringe Masse verschoben werden. Außerdem ergibt sich der Vorteil, daß die Steuerkontakte des Geräteeinschubes bei vollständig eingesetztem Geräteeinschub mit der zugehörigen Steuerbuchse des Einschubfaches kontaktiert werden können, da die Schaltkontakte dann noch nicht zwangsläufig mit den Gegenkontakten in Eingriff stehen. Die Herstellung des Steuerkontaktes kann daher beispielsweise dadurch erfolgen, daß ein Steuerstecker zur Eingriffnahme mit einer zugeordneten Steuerbuchse verschoben wird. Das Erfordernis einer von Hand anzuschließenden Steuerleitung entfällt daher.

Nach einer Ausgestaltung der Erfindung weist der Geräteeinschub Kontaktschienen auf, längs denen die Kontakte zwischen einer zurückgezogenen Stellung, in welcher die Kontakte mit den Gegenkontakten außer Eingriff sind, und einer Kontaktierungsstellung, in welcher sie mit den Gegenkontakten in Eingriff stehen, verschiebbar sind. Die Kontaktierung kann dadurch in einfacher und sicherer Weise erfolgen, beispielsweise durch eine mechanische Einschubhilfe.

Bevorzugt ist es, wenn die Kontaktschienen elektrisch leitend ausgebildet sind und zur elektrischen Verbindung der Kontakte mit dem Geräteeinschub dienen. Die Kontaktschienen dienen dadurch gleichzeitig zur Führung der Kontakte als auch zu deren elektrischen Anschluß, so daß separate elektrische Anschlußmittel entbehrlich sind.

Nach einer weiteren Ausgestaltung der Erfindung sind die Gegenkontakte als elektrisch leitende Schienen ausgebildet, denen bei eingesetztem Geräteeinschub die Kontaktschienen gegenüberliegen und auf welche die Kontakte zur Herstellung der elektrischen Verbindung mit dem Einschubrahmen aufschiebbar sind. Diese Maßnahme ermöglicht wiederum eine einfache und sichere Kontaktierung der Kontakte mit den Gegenkontakten.

Nach einer weiteren Ausgestaltung der Erfindung sind die Kontakte jeweils durch zwei Kontaktfinger gebildet, die an zwei voneinander abgewandten Seiten der Kontaktschiene anliegen. Dabei sind bevorzugt Anpreßmittel vorgesehen, durch welche die Kontaktfinger zumindest in ihrer Kontaktierungsstellung gegen die Kontaktschiene und gegen die Gegenkontaktschiene anpreßbar sind. Die Kontakte weisen dadurch einen konstruktiv geschickten Aufbau auf, wobei durch die Anpreßmittel ein guter elektrischer Kontakt sichergestellt ist. Bevorzugt sind die Anpreßmittel nur in der Kontaktierungsstellung der Kontaktfinger aktiviert. Während des Verschiebens der Kontaktfinger längs der Kontaktschienen und in der zurückgezogenen Stellung werden die Kontaktfinger also nicht an die Kontaktschiene angepreßt. Das Verschieben der Kontaktfinger wird dadurch erleichtert.

Nach einer weiteren Ausgestaltung der Erfindung sind die Kontaktfinger jeweils durch eine sich an einem Gehäuse abstützende Blattfeder belastet. Damit können die Kontaktfinger in konstruktiv unaufwendiger Weise gleichzeitig an die Kontaktschiene und die Gegenkontaktschiene angepreßt werden.

Nach einer weiteren Ausgestaltung der Erfindung ist das Gehäuse als elektrisches Isoliergehäuse ausgebildet, welches insbesondere aus Kunststoff besteht. Dabei ist zur Aufnahme der Anpreßkräfte bevorzugt ein nicht magnetisierbarer Metallring in das Gehäuse eingelegt, an dem sich die Blattfeder abstützt. Durch das Isoliergehäuse sind die Kontakte nach außen abgeschlossen, so daß Kurzschlüsse verhindert werden.

Nach einer weiteren Ausgestaltung der Erfindung sind zumindest die beiden Blattfedern eines Kontaktfingerpaares einer Kontaktschiene zusammen mit diesen in einem gemeinsamen Gehäuse untergebracht. Es können aber auch mehr Kontaktfinger, beispielsweise zwei Kontaktfingerpaare in einem gemeinsamen Gehäuse untergebracht sein. Dadurch werden Bauteile und Bauraum eingespart.

Nach einer weiteren Ausgestaltung der Erfindung sind Mittel vorgesehen, durch welche die Kontaktfinger entgegen der Kraft der Anpreßmittel von der Kontaktschiene wegbewegbar, insbesondere vollständig abhebbar sind. Dadurch kann die Wirkung der Blattfedern aufgehoben und ein besonders leichtes Verschieben der Kontaktfinger ermöglicht werden, da praktisch keine Reibungskraft mehr zwischen den Kontaktfingern und der Kontaktschiene auftritt.

Beispielsweise ist zwischen den beiden Kontaktfingern eines Kontaktfingerpaares ein Hebelsystem vorgesehen, durch welches die beiden Kontaktfinger auseinanderspreizbar sind. Dies hat den Vorteil, daß beide Kontaktfinger eines Paares in einfacher Weise gemeinsam von der Kontaktschiene gelöst werden können.

Nach einer weiteren Ausgestaltung der Erfindung weist das Hebelsystem in der aufgespreizten Stellung einen Totpunkt auf. Die dauernde Aufspreizung während der Verschiebung der Kontaktfinger ist dadurch erleichtert.

Nach einer weiteren Ausgestaltung der Erfindung sind mehrere, insbesondere alle Kontakte eines Geräteeinschubs gemeinsam verschiebbar. Die Mittel zur Verschiebung der Kontakte werden dadurch vereinfacht.

Nach einer weiteren Ausgestaltung der Erfindung ist zur Verschiebung der Kontakte ein Rahmen, insbesondere aus Kunststoff, vorgesehen, welcher über Streben mit allen zu verschiebenden Kontakten in Eingriff steht oder in Eingriff bringbar ist. Diese Ausgestaltung ist konstruktiv unaufwendig. Bevorzugt weist der Rahmen Seitenwände und Querstreben auf, wodurch der Rahmen versteift wird.

Nach einer weiteren Ausgestaltung der Erfindung weist der Rahmen eine Eingriffsplatte, insbesondere eine Bodenplatte, mit einer Aussparung auf, in welche ein Einschubgestänge eingreifen kann. Der Rahmen kann dadurch vorteilhafterweise durch eine Einschubmechanik, insbesondere von unten, bewegt werden. Die Beeinträchtigung des Geräteeinschubs und des Einschubfaches ist dadurch verhältnismäßig gering.

Nach einer weiteren Ausgestaltung der Erfindung werden vorzugsweise über das Einschubgestänge auch die Anpreßmittel aktiviert und deaktiviert. Vorteilhafterweise entfallen dadurch separate Bauteile.

Nach einer weiteren Ausgestaltung der Erfindung sind die Kontakte gegen eine Verschiebung in Kontaktierungsrichtung und/oder in Dekontaktierungsrichtung verriegelbar. Dadurch wird einerseits eine Fehlbedienung verhindert und andererseits ein Ausschieben des Geräteeinschubs bei einem Funkenüberschlag unterbunden.

Nach einer weiteren Ausgestaltung der Erfindung weist der Geräteeinschub einen Steuerstecker auf, der in eingesetztem Zustand des Geräteeinschubs einer Steuerbuchse im Einschubrahmen gegenüberliegt und zum Eingriff mit der Steuerbuchse verschiebbar ist. Die Herstellung der Steuerkontakte ist dadurch besonders einfach, zusätzliche bewegliche Steuerleitungen werden nicht benötigt. Dadurch entfällt auch der Platzbedarf für eine Steuerleitung.

Nach einer weiteren Ausgestaltung der Erfindung sind zwischen den Kontaktfingern und den Kontaktschienen quer zu den Kontaktschienen verlaufende Streben angeordnet, die jeweils an ihren beiden Enden auf Kurvenbahnen abgestützt sind, die eine erste Rastposition aufweisen, in welcher die Streben die Kontaktfinger von der jeweiligen Kontaktschiene entfernt halten, sowie eine zweite Rastposition, in welcher die Kontaktfinger auf der jeweiligen Kontaktschiene aufliegen.

Durch die auf Kurvenbahnen mit einer ersten Rastposition und einer zweiten Rastposition abgestützten Streben können die Kontaktfinger in besonders geschickter Weise in einer von den Kontaktschienen entfernten Stellungen gehalten werden, um ein leichtes Ein- und Ausfahren der Kontakte zu erreichen. Durch Verschieben der Kurvenbahn nach Erreichen der Kontaktierungsstellung gelangen die Streben in eine zurückgezogene Position, in welcher die Kontaktfinger nicht mehr von den Kontaktschienen entfernt gehalten werden. Damit werden die Anpreßmittel wirksam, durch welche die Kontaktfinger zur Sicherstellung eines guten Kontaktes gegen die Kontaktschienen gepreßt werden. Zum Zurückfahren der Kontaktfinger wird die Kurvenbahn wieder zurückbewegt, so daß die Streben wieder mit den Kontaktfingern in Eingriff gelangen und diese von den Kontaktschienen abheben.

Nach einer Ausgestaltung der Erfindung sind die Streben über insbesondere wälz- oder kugelgelagerte Räder auf den Kurvenbahnen abgestützt. Die Verschiebung der Kurvenbahn ist dadurch vereinfacht.

Bevorzugt ist es, wenn jeweils eine Gruppe von Kontaktfingern durch eine Strebe betätigbar ist. Dies spart Platz und Material.

Nach einer weiteren Ausgestaltung der Erfindung sind die Kurvenbahnen an parallel zu den Kontaktschienen verlaufenden, in deren Längsrichtung hin- und herverschiebbar geführten Schubstangen vorgesehen. Dies ist konstruktiv unaufwendig und ebenfalls platzsparend. Außerdem können mehrere Kurvenbahnen an einer Schubstange für mehrere Streben vorgesehen sein.

Nach einer weiteren Ausgestaltung der Erfindung sind mehrere Schubstangen übereinander angeordnet und durch einen gemeinsamen Hebel, insbesondere gegenläufig, betätigbar. Auch dies ist wiederum platzsparend und vereinfacht außerdem die Betätigung.

Nach einer weiteren Ausgestaltung der Erfindung sind die Kontaktfinger über ein Hebelsystem zwischen ihrer zurückgezogenen Stellung und ihrer Kontaktierungsstellung verschiebbar, wobei zur Betätigung des Hebelsystems ein einfacher Schwenkhebel vorgesehen ist.

Durch die Verwendung eines einfachen Schwenkhebels ist die Betätigung der Einschubmechanik gegenüber den bisher verwendeten Spindelsystemen vereinfacht. Dies wird erfindungsgemäß dadurch ermöglicht, daß die Kontaktfinger nur in der Kontaktierungsstellung gegen die Kontaktschienen gepreßt werden. Während des Ein- und Ausfahrens werden die Kontaktfinger dagegen von den Kontaktschienen vollständig entfernt gehalten. Es sind daher zum Ein- und Ausfahren nur geringe Kräfte erforderlich, die mit einem einfachen Schwenkhebel aufgebracht werden können.

Nach einer weiteren Ausgestaltung der Erfindung sind bei einem Verschwenken des Schwenkhebels um einen ersten Winkel, insbesondere 120°, die Kontakte aus ihrer zurückgezogenen Stellung in ihre Kontaktierungsstellung verschiebbar, und bei einem Verschwenken des Schwenkhebels um einen daran anschließenden zweiten Winkel, insbesondere 60°, die Kontakte auf die Kontaktschienen zubewegbar und an diese anpreßbar. Hierdurch wird vorteilhafterweise durch eine einzige Hebelbewegung zunächst ein Einfahren der Kontakte in die Kontaktierungsstellung und anschließend ein Anpressen der Kontaktfinger auf den Kontaktschienen bewirkt. Entsprechend werden bei umgekehrtem Schwenken des Schwenkhebels zunächst die Kontaktfinger von den Kontaktschienen entfernt und anschließend in ihre zurückgezogene Stellung verschoben.

Nach einer weiteren Ausgestaltung der Erfindung ist über den Schwenkhebel ein Zylinder mit einer als Kurvenbahn ausgebildeten Umfangsnut verdrehbar, längs welcher eine Rolle läuft, die mit einem Hebel der Einschubmechanik zur Verschiebung der Kontakte verbunden ist. Bevorzugt weist dabei die Umfangsnut einen ersten, sich schräg zur Umfangsrichtung erstreckenden Abschnitt und einen daran anschließenden zweiten, sich in Umfangsrichtung erstreckenden Abschnitt auf. Beim Verschwenken des Schwenkhebels wird also der Zylinder um seine Zylinderachse gedreht und dadurch über die Umfangsnut die Einschubmechanik für die Kontakte betätigt. Durch den an den schrägen Nutabschnitt anschließenden Abschnitt in Umfangsrichtung wird ein Weiterdrehen des Zylinders ohne Wirkung auf die Einschubmechanik ermöglicht. Diese Drehung kann daher zur Aktivierung der Anpreßmittel für die Kontaktfinger verwendet werden. Entsprechend wird bei umgekehrter Betätigung des Schwenkhebels zunächst ein Deaktivieren der Anpreßmittel bewirkt, während die Einschubmechanik erst anschließend betätigt wird, um die Kontaktfinger in ihre zurückgezogene Stellung zu bewegen. Somit ist ein leichtes Ein- und Ausfahren der Kontaktfinger in einfacher Weise sichergestellt.

Nach einer weiteren Ausgestaltung der Erfindung ist an dem Zylinder ein Bolzen vorgesehen, der in eine zugeordnete Aufnahme eines Betätigungshebels einfahrbar ist, durch den die Anpreßmittel der Kontaktfinger aktivierbar und bei umgekehrter Betätigung deaktivierbar sind. Damit kann durch Drehung des Zylinders auch die Aktivierung und Deaktivierung der Anpreßmittel bewirkt werden.

Ausführungsbeispiele der Erfindung sind in der Zeichnung dargestellt und werden nachfolgend beschrieben. Es zeigen, jeweils in schematischer Darstellung,
- Fig. 1: einen Vertikalschnitt durch eine erfindungsgemäße Schaltanlage in zurückgezogener Stellung der Kontakte,
- Fig. 2: eine Fig. 1 entsprechende Darstellung der erfindungsgemäßen Schaltanlage in Kontaktierungsstellung,
- Fig. 3: einen Horizontalschnitt durch die erfindungsgemäße Schaltanlage mit zurückgezogenen Kontakten,
- Fig. 4: eine Darstellung gemäß Fig. 3 der erfindungsgemäßen Schaltanlage in Kontaktierungsstellung,
- Fig. 5: einen Vertikalschnitt durch ein Detail einer Variante der erfindungsgemäßen Schaltanlage,

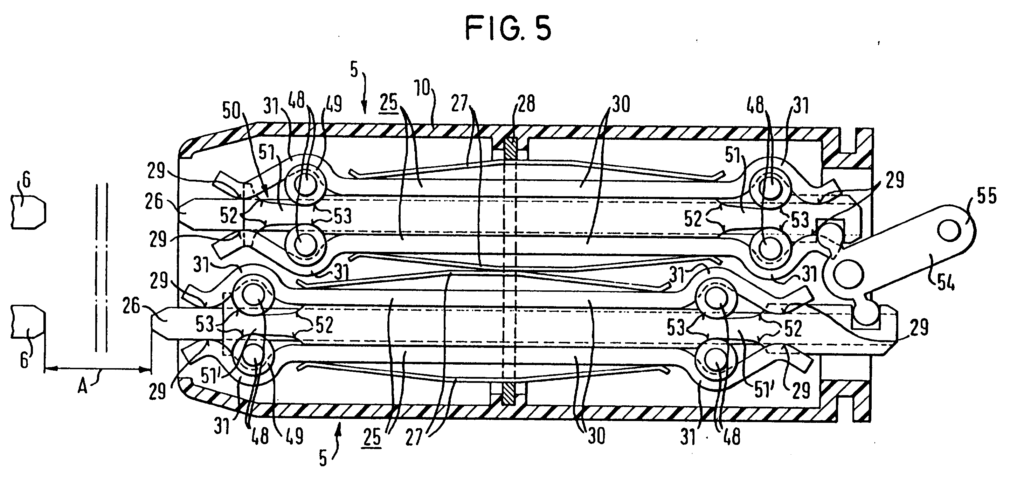

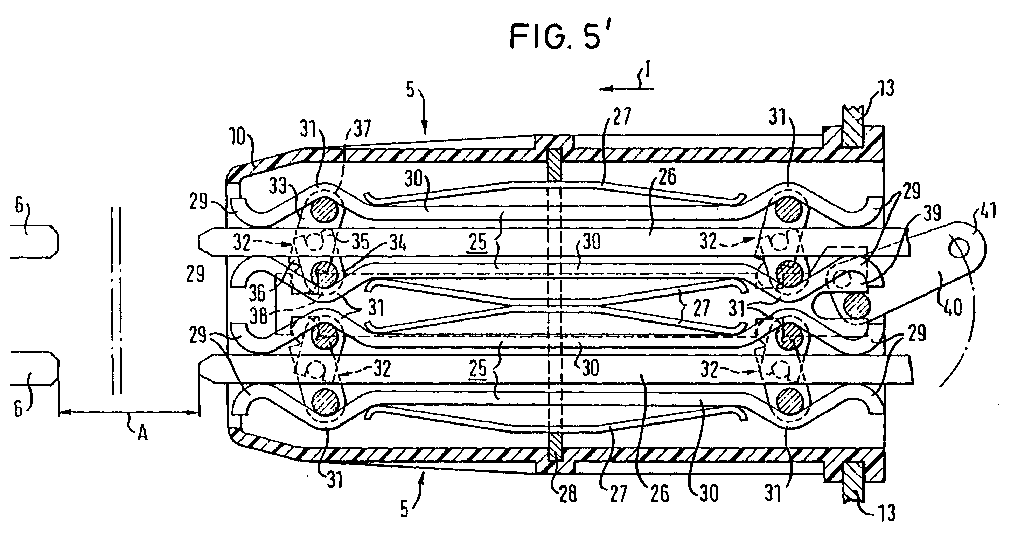

- Fig. 5': eine Variante zu Fig. 5,

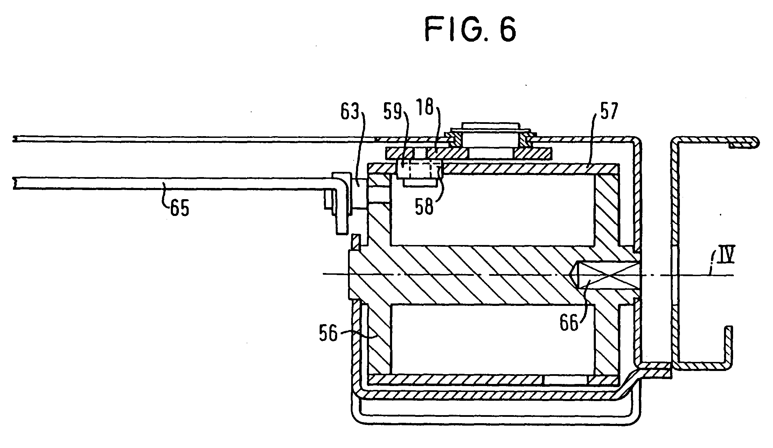

- Fig. 6: ein Detail einer weiteren Variante der erfindungsgemäßen Schaltanlage in einem Vertikalschnitt,

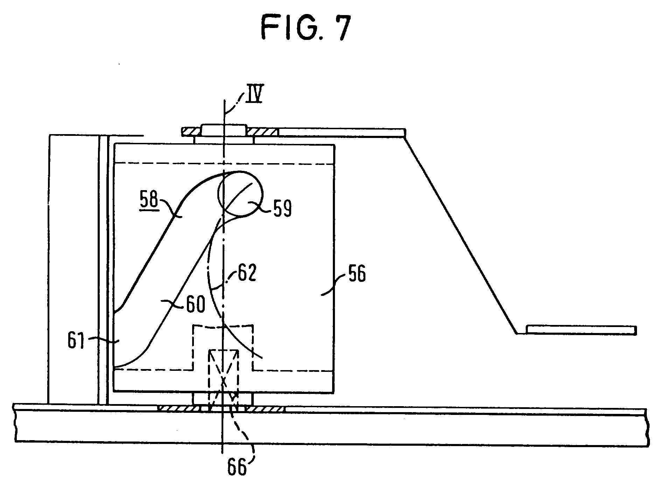

- Fig. 7: eine Draufsicht auf die Oberseite des Details von Fig. 6, und

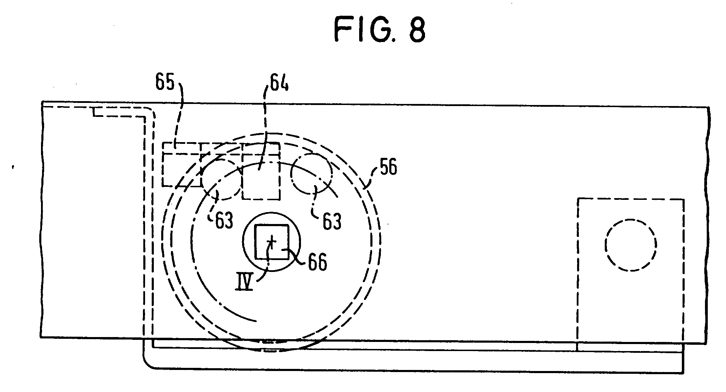

- Fig. 8: eine Draufsicht auf die Vorderseite des Details von Fig. 6.

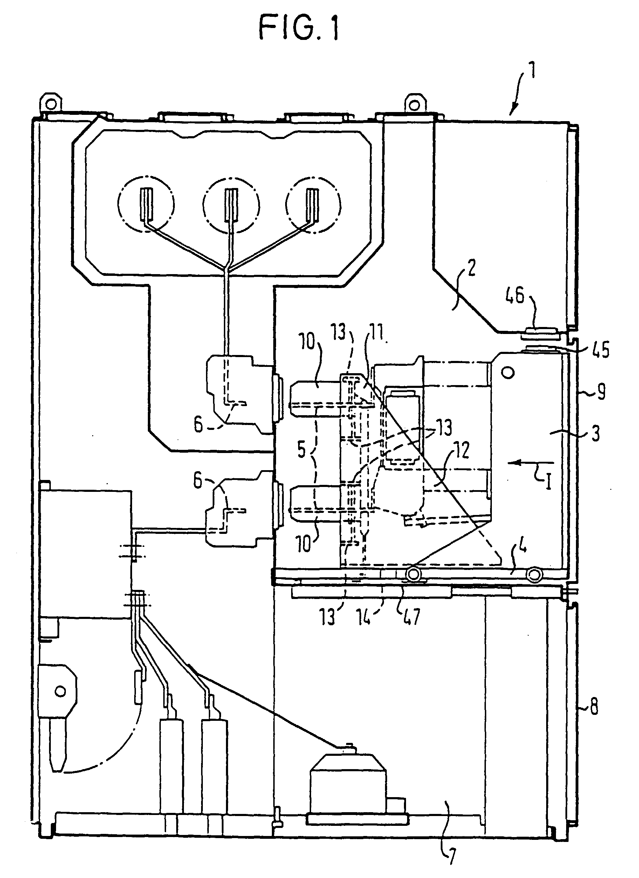

Fig. 1 zeigt einen Rahmen 1 einer erfindungsgemäßen Schaltanlage mit einem Einschubfach 2 und einem Geräteeinschub 3, der auf einem Fahrgestell 4 montiert und in Richtung des Pfeiles I in das Einschubfach 2 ein- und ausfahrbar ist. Der Geräteeinschub 3 umfaßt elektrische Kontakte 5, die mit Gegenkontakten 6 im Rahmen 1 kontaktierbar sind. Unterhalb des Einschubfaches 2 ist ein Kabelanschlußraum 7 angeordnet, der durch eine Tür 8 verschließbar ist. Das Einschubfach 2 ist durch eine Tür 9 verschließbar.

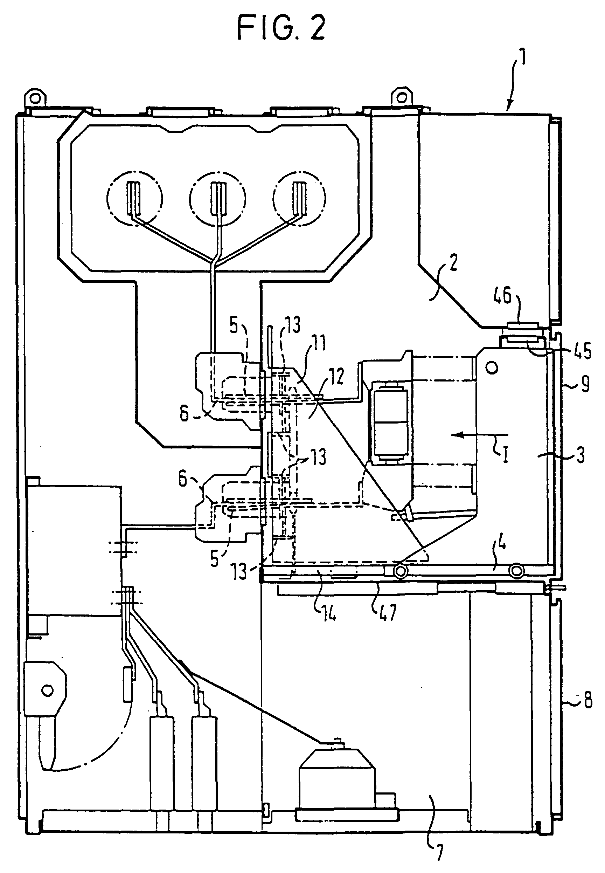

Die Kontakte 5 sind jeweils in einem Isoliergehäuse 10 aus Kunststoff untergebracht. Die Isoliergehäuse 10 werden von einem Kunststoffrahmen 11 getragen, der auf dem Geräteeinschub 3 in Einschubrichtung I verschiebbar geführt ist. Durch Verschieben des Trägerrahmens 11 mit den Gehäusen 10 können die Kontakte 5 des Geräteeinschubs 3 mit den Gegenkontakten 6 im Rahmen 1 in Eingriff gebracht werden. Diese Eingriffsstellung ist in Fig. 2 gezeigt.

Der Trägerrahmen 11 umfaßt Seitenwände 12, zwischen diesen verlaufende Querstreben 13 sowie eine Bodenplatte 14. Die Bodenplatte 14 und die Seitenwände 12 sind zur Versteifung des Trägerrahmens 11 verhältnismäßig groß ausgebildet. Die Querstreben 13 zwischen den Seitenwänden 12 tragen die Isoliergehäuse 10 mit den Kontakten 5.

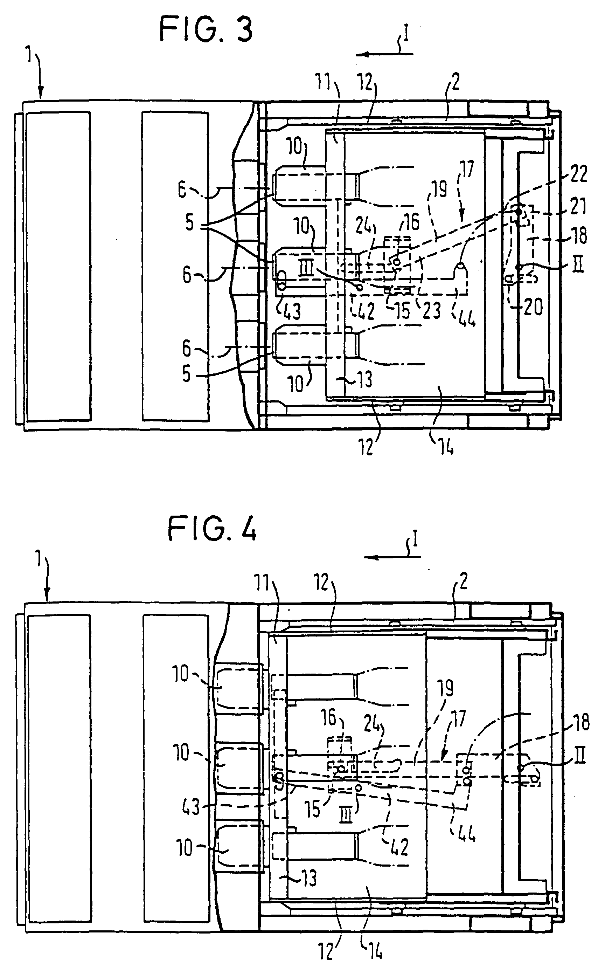

Wie man in den Fig. 3 und 4 erkennt, weist die Bodenplatte 14 des Trägerrahmens 11 eine Ausnehmung 15 auf. In diese Ausnehmung 15 greift ein Bolzen 16 eines Einschubgestänges 17 ein, welches einen Schwenkhebel 18 und eine Koppelstange 19 aufweist. Der Schwenkhebel 18 ist mit seinem einen Ende 20 am Einschubrahmen 3 um eine Achse II schwenkbar angelenkt und beispielsweise über einen Spindelantrieb oder, wie in den Fig. 6 bis 8 dargestellt, durch einen über einen einfachen Hebel verdrehbaren Zylinder 56 mit einer Umfangsnut 58, in welche der Schwenkhebel 18 mittels einer Rolle 59 eingreift, um ca. 90° verschwenkbar. Am anderen Ende 21 des Schwenkhebels 18 ist das eine Ende 22 der Koppelstange 19 angelenkt, deren anderes Ende 23 den Bolzen 16 trägt.

Der Bolzen 16 ist in einer Kulissenführung 24 geführt, die in der Querschottung 47 zwischen Einschubfach 2 und Kabelanschlußraum 7 vorgesehen ist. Die Kulissenführung 24 ist in etwa in der Quermittelebene der Querschottung 47 angeordnet und verläuft im wesentlichen in Einschubrichtung I. An ihrem zur Vorderseite des Rahmens 1 weisenden Ende ist die Kulissenführung 24 jedoch schräg zur Seite abgewinkelt ausgebildet, um den Bolzen 16 in eine Außereingriffstellung mit der Ausnehmung 15 in der Bodenplatte 14 des Trägerrahmens 11 zu bringen.

Fig. 5 zeigt die Anordnung der Kontakte 5 in den Isoliergehäusen 10, wobei hier zwei Kontakte 5 in einem gemeinsamen Gehäuse 10 untergebracht sind. Die Kontakte 5 umfassen jeweils zwei Kontaktfinger 25 aus elektrisch leitfähigem Material, die auf zwei voneinander abgewandten Seiten einer elektrisch leitenden, elektrisch und mechanisch mit dem Einschubrahmen 3 verbundenen Kontaktschiene 26 angeordnet sind. Die Kontaktfinger 25 sind jeweils durch eine Blattfeder 27 in Richtung auf die Kontaktschiene 26 belastet, wobei sich die Blattfedern 27 in einem im Isoliergehäuse 10 gelagerten, nicht magnetisierbaren Metallring 28 abstützen. Das heißt, der Metallring 28 umfaßt alle vier Blattfedern 27, wobei die beiden äußeren Blattfedern 27 am Metallring 28 anliegen, während die beiden inneren Blattfedern 27 aneinander anliegen.

Die Kontaktfinger 25 sind jeweils an ihren beiden Enden derart wellenförmig ausgebildet, daß an jedem Ende ein Kontaktbereich 29 ausgebildet wird, der mit der Kontaktschiene 26 in Kontakt steht, während die übrigen Abschnitte der Kontaktfinger 25 von den Kontaktschienen 26 beabstandet sind. Die Blattfedern 27 greifen an einem mittleren Abschnitt 30 zwischen den beiden Kontaktbereichen 29 an, so daß diese elastisch gegen die Kontaktschiene 26 gedrängt werden. Auf diese Weise kann ein sicherer Kontakt zwischen den Kontaktbereichen 29 und den Kontaktschienen 26 gewährleistet werden, wobei über die Blattfedern 27 eine sehr hohe Anpreßkraft eingebracht werden kann.

Die wellenartige Ausgestaltung der beiden Enden eines jeden Kontaktfingers 25 ist außerdem so gewählt, daß zwischen dem mittleren Abschnitt 30 der Kontaktfinger 25, an dem jeweils die Blattfeder 27 angreift, und den Kontaktbereichen 29 jeweils ein von den Kontaktschienen 26 weggebogener Stützabschnitt 31 gebildet wird, an dem jeweils eine quer zu den Kontaktschienen 26 verlaufende Strebe 48 angreift. Die Streben 48 sind an ihren beiden Enden jeweils mit einem wälz- oder kugelgelagerten Rad 49 versehen, welches sich auf einer Kurvenbahn 50 abstützt, die an parallel zu den Kontaktschienen 26 verlaufenden, in deren Längsrichtung hin- und herverschiebbar geführten Schubstangen 51 vorgesehen sind. Dabei weist jede Schubstange 51 in ihren beiden Endbereichen auf voneinander abgewandten Seiten je eine Kurvenbahn 50 auf, so daß an jeder Schubstange 51 insgesamt vier Kurvenbahnen 50 vorhanden sind, auf denen sich die Räder 49 von vier, entsprechend den Kontaktfingern 25 paarweise angeordneten Streben 48 abstützen.

Auf den Streben 48 sind jeweils mehrere Kontaktfinger 25 abgestützt, und auf jeder Seite der Kontaktfinger 25 ist jeweils eine Schubstange 51 vorhanden. Außerdem sind, wie in Fig. 5 dargestellt, zwei solche Anordnungen übereinander in einem Gehäuse 10 angeordnet, so daß insgesamt vier Schubstangen 51, 51' vorhanden sind. Die Kurvenbahnen 50 der Schubstangen 51, 51' weisen jeweils eine erste Rastposition 52 auf, in welcher die Kontaktfinger 25 von den Kontaktschienen 27 durch die Streben 48 abgehoben sind, sowie eine zweite Rastposition 53, in welcher die Kontaktfinger 25 nicht von den Streben 48 angehoben werden, sondern durch die Tellerfedern 27 gegen die Kontaktschienen 26 gepreßt werden. Diese Rastposition ist in Fig. 5 dargestellt.

Wie man sieht, sind die erste Rastposition 52 und die zweite Rastposition 53 zwischen den oberen Schubstangen 51 und den unteren Schubstangen 51' unterschiedlich orientiert. Ein Bewegen von der ersten Rastposition 52 in die zweite Rastposition 53 erfolgt demnach durch gegenläufige Bewegung der Schubstangen 51 und 51'. Diese gegenläufige Bewegung wird durch den dargestellten Hebel 54 bewirkt, der in dem Gehäuse 10 schwenkbar gelagert ist. An das freie Ende 55 des Hebels 54 ist ein hier nicht dargestelltes Gestänge angelenkt, welches beispielsweise, wie in den Fig. 3 und 4 dargestellt, durch einen im Gehäuseeinschub 3 um eine Achse III drehbar gelagerten Hebel 42 oder, wie in den Fig. 6 bis 8 dargestellt, durch einen über den Zylinder 56 betätigbaren Hebel 65 betätigbar ist.

Das eine Ende 43 des Hebels 42 greift dabei an das nicht dargestellte Gestänge an, während das andere Ende 44 des Hebels 42 von dem Schwenkhebel 18 in dessen Endstellung beaufschlagt wird, in welcher der Trägerrahmen 11 mit den Isoliergehäusen 10 und den Kontakten 5 in Eingriffstellung mit den Gegenkontakten 6 verschoben ist. Dabei ist der Hebelmechanismus zur Betätigung des Hebels 54 so ausgelegt, daß bei der in Fig. 3 dargestellten nicht betätigten Stellung des Hebels 42 alle Kontakbereiche 29 von den Kontaktschienen 26 abgehoben sind, während bei Betätigung des Hebels 42 durch den Schwenkhebel 18 alle Kontaktbereiche 29 unter der Anpreßkraft der Blattfedern 27 an den Kontaktschienen 26 zur Anlage kommen.

Bei der in Fig. 5' dargestellten Variante ist die wellenartige Ausgestaltung der beiden Enden eines jeden Kontaktfingers 25 so gewählt, daß zwischen dem mittleren Abschnitt 30 der Kontaktfinger 25, an dem jeweils die Blattfeder 27 angreift, und den Kontaktbereichen 29 jeweils ein von den Kontaktschienen 26 weggebogener Stützabschnitt 31 gebildet wird, der eine Aufnahme für das eine Ende eines Hebelsystems 32 bildet, das aus zwei Hebeln 33 und 34 gebildet wird, die mit ihren einen Enden 35, 36 gelenkig miteinander verbunden sind, während sich ihre anderen Enden 37 und 38 in je einem Stützabschnitt 31 eines Paares von zwei Kontaktfingern 25 einer Kontaktschiene 26 abstützen. Durch Strecken des Hebelsystems 32 werden die einander gegenüberliegenden Stützabschnitte 31 eines Paares von Kontaktfingern 25 auseinandergedrängt, so daß die Kontaktbereiche 29 von der zugehörigen Kontaktschiene 26 abheben. Dabei ist das Hebelsystem 32 bevorzugt mit einer Totpunktlage der Hebel 33, 34 ausgebildet, so daß die aufgespreizte Stellung kräftefrei gehalten werden kann.

Das Strecken aller Hebelsysteme 32 erfolgt über einen gemeinsamen Hebelmechanismus, der einen mit seinem einen Ende 39 in dem Isoliergehäuse 10 gelagerten Hebel 40 umfaßt. An das andere Ende 41 des Hebels 40 ist ein hier nicht dargestelltes Gestänge angelenkt, welches durch einen im Gehäuseeinschub 3 um eine Achse III drehbar gelagerten Hebel 42 betätigbar ist. Das eine Ende 43 des Hebels 42 greift dabei an das nicht dargestellte Gestänge an, während das andere Ende 44 des Hebels 42 von dem Schwenkhebel 18 in dessen Endstellung beaufschlagt wird, in welcher der Trägerrahmen 11 mit den Isoliergehäusen 10 und den Kontakten 5 in Eingriffstellung mit den Gegenkontakten 6 verschoben ist. Dabei ist der Hebelmechanismus zur Betätigung des Schwenkhebels 40 so ausgelegt, daß bei der in Fig. 3 dargestellten nicht betätigten Stellung des Hebels 42 alle Hebelsysteme 32 gestreckt sind, so daß alle Kontakbereiche 29 von den Kontaktschienen 26 abgehoben sind, während bei Betätigung des Hebels 42 durch den Schwenkhebel 18 alle Hebelsysteme 32 geknickt werden, so daß die Kontaktbereiche 29 unter der Anpreßkraft der Blattfedern 27 an den Kontaktschienen 26 zur Anlage kommen.

Da die Betätigung des Hebels 42 erst in der in Fig. 4 dargestellten Endphase der Schwenkbewegung des Schwenkhebels 18, also in der Endphase des Vorschubes des Trägerrahmens 11 mit den Isoliergehäusen 10 und den Kontakten 5 erfolgt, erfolgt auch die Anlage der Kontaktbereiche 29 der Kontaktfinger 25 an den Kontaktschienen 26 erst in der Endphase dieser Vorschubbewegung. Während der Vorschubbewegung sind die Kontaktbereiche 29 dagegen von den Kontaktschienen 26 abgehoben, so daß keine Reibkräfte zwischen den Kontaktbereichen 29 und den Kontaktschienen 26 überwunden werden müssen. Daher ist die Vorschubbewegung mit einer entsprechend geringen Kraft möglich.

Anders als in Fig. 5 und 5' dargestellt, sind also die Kontaktbereiche 29 in der zurückgezogenen Stellung der Kontakte 5 von den Kontaktschienen 26 abgehoben. Eine Anlage erfolgt erst, wenn die Kontakte 5 so weit verschoben sind, daß die Kontaktfinger 25 den Abstand A zwischen den Kontaktschienen 26 und den Gegenkontakten 6 überbrücken. Die Kontaktbereiche 29 an jeweils einem Ende der Kontaktfinger 25 liegen dann unter dem Anpreßdruck der Blattfedern 27 an den Gegenkontakten 6 an, während die Kontaktbereiche 29 an den jeweils anderen Enden der Kontaktfinger 25 im Bereich der den Gegenkontakten 6 zugewandten Enden der Kontaktschienen 26 anliegen.

Das Kontaktieren der elektrischen Anschlüsse eines Geräteeinschubs 3 mit einem Einschubrahmen 1 erfolgt also derart, daß zunächst der Geräteeinschub 3 in ein Einschubfach 2 eingefahren wird. Die Kontakte 5 des Geräteeinschubs 3 befinden sich nach Einfahren des Geräteeinschubs 3 zunächst noch in einem Abstand A zu den Gegenkontakten 6. Nachdem der Steuerstecker 45 des Einschubrahmens 3 mit der Steuerbuchse 46 des Rahmens 1 verbunden wurde, werden die Kontakte 5 des Geräteeinschubs 3 in Einschubrichtung I bewegt, indem das Hebelsystem 17 betätigt wird. Dabei wird über das Hebelsystem 17 der Trägerrahmen 11 bewegt, welcher die Isoliergehäuse 10 trägt. Mit den Isoliergehäusen 10 werden die Kontaktfinger 25 längs der Kontaktschienen 26 vorgeschoben. Dabei sind die Kontaktbereiche 29 der Kontaktfinger 25 von den Kontaktschienen 26 durch die Streben 48 beziehungsweise die Wirkung der gestreckten Hebelsysteme 32 abgehoben, so daß das Verschieben mit geringem Kraftaufwand erfolgen kann.

Am Ende der Vorschubbewegung tritt bei dem in Fig. 3 und 4 dargestellten Ausführungsbeispiel der Schwenkhebel 18 des Hebelsystems 17 mit dem Hebel 42 in Eingriff, welcher dadurch um die Achse III gedreht wird und über den nicht dargestellten Hebelmechanismus die Hebel 40 der Isoliergehäuse 10 derart betätigt, daß die Hebelsysteme 32 aus ihrer Strecklage eingeknickt werden, so daß die Aufspreizung der Kontaktfinger 25 beendet wird. In dieser, in den Fig. 2 und 4 dargestellten Situation sind die Kontaktfinger 25 bereits so weit in Einschubrichtung I vorgeschoben, daß sie sich über den Gegenkontakten 6 befinden. Das heißt, bei Betätigung des Hebels 40 über den Hebel 42 kommen die Kontaktbereiche 29 an jeweils einem Ende der Kontaktfinger 25 an den Gegenkontakten 6 zur Anlage, während die Kontaktbereiche 29 an den jeweils anderen Enden der Kontaktfinger 25 an den Endbereichen der Kontaktschienen 26 zur Anlage kommen. Auf diese Weise wird der Abstand A zwischen den Gegenkontakten 6 und den Kontaktschienen 26 überbrückt und eine elektrische Verbindung zwischen den Gegenkontakten 6 und den zugehörigen elektrischen Anschlüssen des Geräteeinschubs 3 hergestellt.

Das Lösen der elektrischen Verbindung erfolgt in umgekehrter Weise. Durch Zurückschwenken des Schwenkhebels 18 wird zunächst der Hebel 42 in seine Ausgangslage gebracht und damit die Kontaktbereiche 29 der Kontaktfinger 25 wieder von den Gegenkontakten 6 und den Kontaktschienen 26 abgehoben. Durch Weiterschwenken des Schwenkhebels 18 können nun mit geringer Kraft die Kontaktfinger 25 in ihre Ausgangslage zurückbewegt werden. Bevorzugt verbleiben die Kontaktfinger 25 nach dem Zurückziehen in ihrer aufgespreizten Stellung. Nach vollständigem Zurückziehen der Kontaktfinger 25 kann dann der Steuerstecker 45 aus der Steuerbuchse 46 gelöst werden. Nun kann der Geräteeinschub 3 aus dem Gehäusefach 2 entnommen werden.

Die Betätigung des Hebels 18 erfolgt bei dem Ausführungsbeispiel gemäß Fig. 6 bis 8 mittels eines Zylinders 56, der in dem Einschubfach 2 drehbar gelagert ist. Der Zylinder 56 weist in seinem Zylindermantel 57 eine Umfangsnut 58 auf, in welche der Hebel 18 mit seinem Ende 20 über eine Rolle 59 eingreift. Die Umfangsnut 58 ist dabei als Kurvenbahn ausgebildet, wie man insbesondere in Fig. 7 erkennt. Sie weist einen ersten Abschnitt 60 auf, der schräg zur Umfangsrichtung des Zylindermantels 57 verläuft, sowie einen daran anschließenden zweiten Abschnitt 61, der in Umfangsrichtung verläuft. Dadurch wird erreicht, daß bei einem Verdrehen des Zylinders 56 um seine Zylinderachse IV das Ende 20 des Hebels 18 gemäß der in Fig. 7 eingezeichneten Kreisbahn 62 verschoben wird. Anschließend ist aufgrund des Abschnittes 61 ein Weiterdrehen des Zylinders 56 ohne Verschwenken des Hebels 18 möglich. Dabei ist die Umfangsnut 58 so ausgebildet, daß der erste Abschnitt 60 einer Verdrehung des Zylinders 56 um 120° und der zweite Abschnitt 61 um anschließende 60° entspricht. Insgesamt ist der Zylinder 56 somit um 180° verdrehbar.

An seinem zum Inneren des Einschubfachs 2 weisenden Ende ist der Zylinder 56 zudem mit einem Bolzen 63 versehen, der, wie insbesondere in Fig. 8 erkennbar ist, in eine Aufnahme 64 eines Hebels 65 einfahrbar ist, über welchen der Hebel 54 alternativ zum Hebel 42 betätigbar ist. Das Einfahren des Bolzens 63 in die Aufnahme 64 erfolgt dabei nach Verdrehen des Zylinders 56 um 120°. Nach Weiterdrehen des Zylinders 56 um weitere 60° befindet sich der Bolzen 63 in der strichpunktiert dargestellten Stellung. Über die Aufnahme 64 wurde der Hebel 65 mitgenommen und der Hebel 54 betätigt. In dieser betätigten Stellung werden die Kontaktfinger 25 gegen die Kontaktschienen 26 angepreßt.

Zum Verdrehen des Zylinders 56 weist dieser eine zentrale Vierkantausnehmung 66 auf, in welche ein entsprechend gestalteter Schwenkhebel einsteckbar ist. Der Zylinder 56 kann aber auch automatisch, beispielsweise elektromotorisch verdrehbar sein.

Die verschiedenen Betätigungsschritte sind bevorzugt durch die üblichen Verriegelungen gegen Fehlbedienung geschützt. So ist insbesondere ein Verschieben der Kontakte 5 bei nicht in die Steuerbuchse 46 eingestecktem Steuerstecker 45 blockiert. Ebenso ist ein Lösen des Steuersteckers 45 aus der Steuerbuchse 46 blockiert, solange die Kontakte 5 aus ihrer Ausgangslage verschoben sind.

Die erfindungsgemäße Schaltanlage ist sehr betriebssicher und ermöglicht eine elektrische Verbindung zwischen dem Geräteeinschub 3 und dem Rahmen 1 mit geringem Kraftaufwand. Auch die Belastung der Bauteile ist entsprechend gering, so daß diese weitgehend aus Kunststoff hergestellt werden können. Neben der geringen Masse, die zum Herstellen der elektrischen Verbindung verschoben werden muß, und der dabei auftretenden geringen Reibung, hat die erfindungsgemäße Schaltanlage den Vorteil, daß der Steuerstecker 45 des Geräteeinschubs 3 automatisch mit der Steuerbuchse 46 des Rahmens 1 verbunden werden kann. Es sind daher keine von Hand anzuschließenden Steuerleitungen erforderlich.

Aufgrund der großen Betriebssicherheit und der geringen Belastung der Bauelemente ist die erfindungsgemäße Schaltanlage insbesondere für Mittelspannungen geeignet, also Nennpannungen zwischen > 1 KV und < 52 KV. Durch die erfindungsgemäße Gestaltung der Schaltanlage können die hohen Kräfte, insbesondere die großen erforderlichen Anpreßkräfte, bei Mittelspannungen aufgenommen und die bei Mittelspannungen erforderlichen großen Abstände zwischen den Kontakten 5 und den Gegenkontakten 6 sicher überbrückt werden. Dadurch können auch die Bauelemente weitgehend aus Kunststoff bestehen, so daß eine sehr gute Isolierung möglich ist.

### Bezugszeichenliste

- 1: Rahmen
- 2: Einschubfach
- 3: Geräteeinschub
- 4: Fahrgestell von 3
- 5: Kontakt
- 6: Gegenkontakt
- 7: Kabelanschlußraum
- 8: Tür von 7
- 9: Tür von 2
- 10: Isoliergehäuse
- 11: Trägerrahmen
- 12: Seitenwand von 11
- 13: Querstrebe
- 14: Bodenplatte
- 15: Ausnehmung von 14
- 16: Bolzen
- 17: Hebelsystem
- 18: Schwenkhebel
- 19: Koppelstange
- 20: erstes Ende von 18
- 21: zweites Ende von 18
- 22: erstes Ende von 19
- 23: zweites Ende von 19
- 24: Kulissenführung
- 25: Kontaktfinger
- 26: Kontaktschiene
- 27: Blattfeder
- 28: Metallring
- 29: Kontaktabschnitt
- 30: Mittelabschnitt
- 31: Stützabschnitt
- 32: Hebelsystem
- 33: erster Hebel
- 34: zweiter Hebel
- 35: erstes Ende von 33
- 36: erstes Ende von 34
- 37: zweites Ende von 33
- 38: zweites Ende von 34
- 39: erstes Ende von 40
- 40: Hebel
- 41: zweites Ende von 40
- 42: Hebel
- 43: erstes Ende von 42
- 44: zweites Ende von 42
- 45: Steuerstecker
- 46: Steuerbuchse
- 47: Querschottung
- 48: Strebe
- 49: Rad
- 50: Kurvenbahn
- 51, 51': Schubstange
- 52: erste Rastposition
- 53: zweite Rastposition
- 54: Hebel
- 55: Ende von 54
- 56: Zylinder
- 57: Mantel von 56
- 58: Umfangsnut
- 59: Rolle
- 60: erster Abschnitt von 58
- 61: zweiter Abschnitt von 58
- 62: Bewegungsbahn von 59
- 63: Bolzen
- 64: Aufnahme
- 65: Hebel
- 66: Vierkantaufnahme
- I: Einschubrichtung
- II: Schwenkachse von 18
- III: Drehachse von 42
- IV: Drehachse von 56

## Patentansprüche

1. Elektrische Schaltanlage, insbesondere für Mittelspannungen, also Nennspannungen im Bereich größer 1 KV bis kleiner 52 KV, mit wenigstens einem in ein Einschubfach (2) eines Rahmens (1) einsetzbaren, insbesondere Schaltgeräte tragenden Geräteeinschub (3), der mit elektrischen Kontakten (5) versehen ist, die mit im Rahmen (1) gehalterten elektrischen Gegenkontakten (6) in Eingriff bringbar sind,
dadurch **gekennzeichnet,**
daß die Kontakte (5) zur Eingriffnahme mit den Gegenkontakten (6) bei in das Einschubfach (2) des Rahmens (1) eingeschobenen Geräteeinschub (3) relativ zum Geräteeinschub (3) in Richtung auf die Gegenkontakte (6) verschiebbar sind.

2. Schaltanlage nach Anspruch 1,
dadurch **gekennzeichnet,**
daß der Geräteeinschub (3) insbesondere elektrisch leitend ausgebildete und zur elektrischen Verbindung der Kontakte (5) mit dem Geräteeinschub (3) dienende Kontaktschienen (26) aufweist, längs denen die Kontakte (5) zwischen einer zurückgezogenen Stellung, in welcher die Kontakte (5) mit den Gegenkontakten (6) außer Eingriff sind, und einer Kontaktierungsstellung, in welcher sie mit den Gegenkontakten (6) in Eingriff stehen, verschiebbar sind, wobei die Gegenkontakte (6) bevorzugt ebenfalls als elektrisch leitende Schienen ausgebildet sind, denen bei eingesetztem Geräteeinschub (3) die Kontaktschienen (26) zusammen mit diesen gegenüberliegen und auf welche die Kontakte (5) zur Herstellung der elektrischen Verbindung mit dem Einschubrahmen (3) aufschiebbar sind.

3. Schaltanlage nach Anspruch 1 oder 2,
dadurch **gekennzeichnet,**
daß die Kontakte (5) jeweils durch zwei Kontaktfinger (25) gebildet sind, die an zwei voneinander abgewandten Seiten der Kontaktschiene (26) anliegen, wobei bevorzugt Anpreßmittel, insbesondere eine sich an einem Gehäuse (10) abstützende Blattfeder (27) vorgesehen sind, durch welche die Kontaktfinger (25) zumindest in ihrer Kontaktierungsstellung gegen die Kontaktschiene (26) und gegebenenfalls gegen die Gegenkontaktschiene (6) anpreßbar sind.

4. Schaltanlage nach Anspruch 3,
dadurch **gekennzeichnet,**
daß Mittel (32) vorgesehen sind, durch welche die Kontaktfinger (25) entgegen der Kraft der Anpreßmittel (27) von der Kontaktschiene (26) wegbewegbar, insbesondere vollständig abhebbar sind.

5. Schaltanlage nach Anspruch 4,
dadurch **gekennzeichnet,**
daß zwischen den Kontaktfingern (25) und den Kontaktschienen (6, 26) quer zu den Kontaktschienen (6, 26) verlaufende Streben (48) angeordnet sind, die jeweils an ihren beiden Enden auf Kurvenbahnen (50) abgestützt sind, die eine erste Rastposition (52) aufweisen, in welcher die Streben (48) die Kontaktfinger (25) von der jeweiligen Kontaktschiene (6, 26) entfernt halten, sowie eine zweite Rastposition (53), in welcher die Kontaktfinger (25) auf der jeweiligen Kontaktschiene (6, 26) aufliegen.

6. Schaltanlage nach Anspruch 5,
dadurch **gekennzeichnet,**
daß die Streben (48) über insbesondere wälz- oder kugelgelagerte Räder (49) auf den Kurvenbahnen (50) abgestützt sind, wobei bevorzugt eine Gruppe von Kontaktfingern (25) durch eine Strebe (48) betätigbar ist und die Kurvenbahnen (50) insbesondere an parallel zu den Kontaktschienen (6, 26) verlaufenden, in deren Längsrichtung hin- und herverschiebbar geführten Schubstangen (51, 51') vorgesehen sind, von denen bevorzugt jeweils zwei Schubstangen (51, 51') übereinander angeordnet und durch einen gemeinsamen Hebel (54), insbesondere gegenläufig, betätigbar sind.

7. Schaltanlage nach einem der Ansprüche 4 bis 6,
dadurch **gekennzeichnet,**
daß die Kontaktfinger (25) über ein Hebelsystem (17) zwischen ihrer zurückgezogenen Stellung und ihrer Kontaktierungsstellung verschiebbar sind, und daß zur Betätigung des Hebelsystems (17) ein einfacher Schwenkhebel vorgesehen ist.

8. Schaltanlage nach Anspruch 7,
dadurch **gekennzeichnet,**
daß bei einem Verschwenken des Schwenkhebels um einen ersten Winkel, insbesondere 120°, die Kontakte (5) aus ihrer zurückgezogenen Stellung in ihre Kontaktierungsstellung verschiebbar sind, und daß bei einem Verschwenken des Schwenkhebels um einen daran anschließenden zweiten Winkel, insbesondere 60°, die Kontakte (5) auf die Kontaktschienen (6, 26) zubewegbar und an diese anpreßbar sind.

9. Schaltanlage nach Anspruch 7 oder 8,
dadurch **gekennzeichnet,**
daß über den Schwenkhebel ein Zylinder (56) mit einer als Kurvenbahn ausgebildeten Umfangsnut (58) verdrehbar ist, längst welcher eine Rolle (59) läuft, die mit einem Hebel (18) der Einschubmechanik zur Verschiebung der Kontakte (5) verbunden ist, wobei die Umfangsnut (58) bevorzugt einen ersten, sich schräg zur Umfangsrichtung erstreckenden Abschnitt (60) und einen daran anschließenden, zweiten, sich in Umfangsrichtung erstreckenden Abschnitt (61) aufweist.

10. Schaltanlage nach Anspruch 9,
dadurch **gekennzeichnet,**
daß an dem Zylinder (56) ein Bolzen (63) vorgesehen ist, der in eine zugeordnete Aufnahme (64) eines Betätigungshebels (65) einfahrbar ist, durch den die Anpreßmittel der Kontaktfinger (25) aktivierbar und bei umgekehrter Betätigung deaktivierbar sind.
